(19) Europäisches Patentamt
European Patent Office
Office européen des brevets

(11) **EP 2 148 186 A1**

(12) **EUROPEAN PATENT APPLICATION**

(43) Date of publication:
**27.01.2010 Bulletin 2010/04**

(51) Int Cl.:
***G01N 21/39*** *(2006.01)*

(21) Application number: **09164830.3**

(22) Date of filing: **07.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **21.07.2008 US 177053**

(71) Applicant: **Honeywell International Inc.**
**Morristown, NJ 07962 (US)**

(72) Inventors:
• **Cole, Barrett E.**
**Bloomington, MN 55431 (US)**
• **Cox, James A.**
**New Brighton, MN 55112 (US)**
• **Marta, Teresa M.**
**White Bear Lake, MN 55110 (US)**

(74) Representative: **Buckley, Guy Julian**
**Patent Outsourcing Limited**
**1 King Street**
**Bakewell**
**Derbyshire DE45 1DZ (GB)**

(54) **Distributed gas detection**

(57) A system (300) includes a plurality of optical resonators (16), a light source (22), an optical fiber (65) that couples the plurality of optical resonators to the light source, and a detector (20) that is coupled to the plurality of optical resonators. The detectors (20) are configured to detect an energy in the plurality of optical resonators.

*FIG. 1*

**EP 2 148 186 A1**

## Description

## Related Application

This application is related to U.S. Serial Application No. 11/384,017, which was filed on March 17, 2006 and published as US20070216903 on September 20, 2007.

## Technical Field

Various embodiments relate to the detection of gases, particles, and compounds, and in an embodiment, but not by way of limitation, distributed gas detection.

## Background

It is desirable to have sensors located at positions where the events to be sensed are occurring. While this is generally true no matter the event, substance, or compound that is to be sensed, it is particularly true for gas sensors. For the detection of gases at multiple locations, the standard approach is aspiration, wherein the gas is taken from a remote location to a sensitive sensor at a fixed location that can provide the necessary sensitivity for adequate detection. However, this standard approach has some drawbacks in that many things can happen to the gas on the way to the sensing element.

## Brief Description of the Drawings

**FIG. 1** is an example embodiment of a cavity ring down spectrometer.
**FIG. 2** is a graph illustrating cavity ring down.
**FIG. 3** is an example embodiment of a system of a tunable laser or other light source coupled to a plurality of optical resonators.
**FIG. 4** illustrates an example absorption spectra of ammonia ($NH_3$) showing high and low absorption lines and wavelengths of possible laser tuning.

## Detailed Description

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. Furthermore, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

In an embodiment, an apparatus is provided for measuring a gas within a semiconductor thin film process. The apparatus includes an optical resonator disposed within an environment of the thin-film process, a light source that is launched into the optical resonator at a characteristic frequency of the gas, a detector that detects an energy escaping from the resonator and a processor that calculates a concentration of the gas based upon a ring down rate of the detected energy. The light source can be an ordinary light source, a laser, a tunable laser, or a combination of any of the foregoing.

In an embodiment, an apparatus includes a light source such as a laser, a modulator, and other high end components that are necessary for precision high sensitivity measurements. The light from these components is distributed to a plurality of remote units that includes the lower cost components of the system. In this way, the distributed system avoids having a number of high end components distributed around the gas sensing locations. The location of the sensing head where the gas is to be sensed contributes to reducing gas handling costs and reduces performance disadvantages. It makes it possible to sense toxic or corrosive gases without the need for piping these gases to a central location with pipes that have to be designed to handle a wide range of corrosive gases. To accomplish this, fiber optical elements communicate a probe light to the remote spot where the sensor and gas are located. In an embodiment, the light is directed to remote resonators located in room air that sample the concentration of gas species in that environment.

In an embodiment, the distributed system includes a central optical processing module. The light is distributed either sequentially through optical switches or other means to the units, or it is split and distributed simultaneously to all units. An optical measurement, which can include absorption, fluorescence, time decay, or scattering for example, can be taken by a dedicated detector at the site, and the results interpreted and sent back as a simple value to a main control unit. In another embodiment, the optical signal can be sent back to a home base for analysis. The method that is chosen is influenced by the expense of the unit required to make the analysis. In an example of cavity ring down spectroscopy, the light source and modulator are maintained at the control center. Optical fibers feed the light to the remote cavity ring down spectroscopy sensing module. At the module, a piezoelectric mirror is continually run through the optical modes and the light is coupled into the cavity. The light to the central modulator is shut off, and the decay time is measured by the remote detectors and an application specific integrated circuit analyzer. The light source at central control is then tuned to another wavelength and the process is repeated. This method or similar methods in which light is the probe can be delivered to the remote probes much as wires would be used to deliver electrical signals for remote sensing and analysis. The remote nature of this makes it possible to sense at the remote environment with much higher signal integrity. Multiple sources with different emission wavelengths can be located at the central station, and can send different wavelengths to the same remotely distributed rings to permit analysis of different gases that have absorption in different spectral regions.

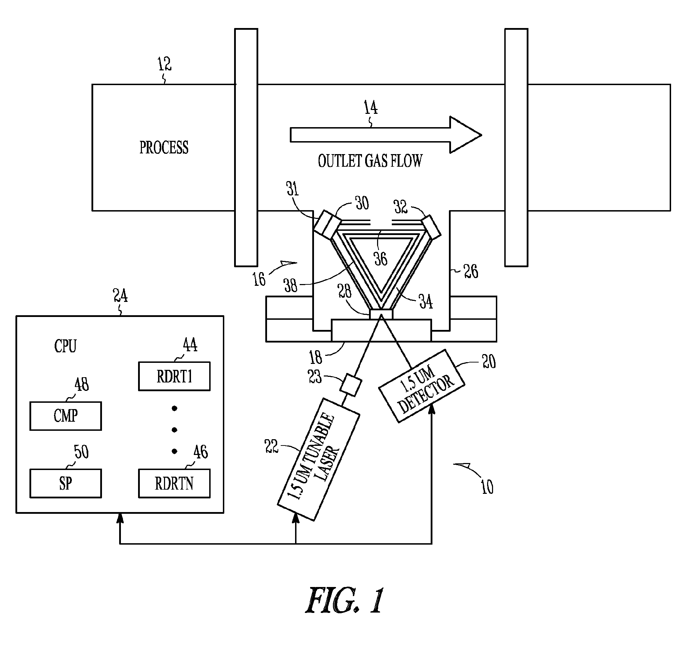

**FIG. 1** is a block diagram of a gas detection system **10,** shown in a context of use generally in accordance with an illustrated embodiment of the invention. As shown in **FIG. 1,** the detection system **10** may be used to monitor gas concentrations within a semiconductor thin film process **12.** While the system **10** is shown as being used to detect gas concentration in an outlet gas flow (stream) **14,** it should be understood that the system **10** could just as well be used to detect an inlet gas flow into the process **12.**

The detection system **10** may include an optical resonator **16,** an optical detector **20,** a tunable laser or other light source **22,** and a central processing unit (CPU) **24.** When a tunable laser is used, the tunable laser may be tunable over some appropriate optical wavelength range (*e.g.*, 1-12 micrometers).

The optical resonator **16** may be placed directly in the outlet gas flow **14** or offset from the gas stream within a "T" connection **26** as shown in **FIG. 1.** As would be known to those of skill in the art, the input and output gas flows of the process **12** may include a number of very corrosive gases. Since the optical resonator **16** is located in the gas stream, the optical resonator **16** may be fabricated of materials that are resistant to those gases. With suitable protective provision, the tunable laser **22** and detector **20** may also be located within the gas stream **14** or may interact with the resonator **16** through an optically transparent window **18** that functions to isolate the process environment from the instrument environment.

The window **18** may be fabricated of an appropriate optical glass (*e.g.*, quartz glass). Alternatively, the window **18** may be fabricated from sapphire.

The optical resonator **16** may consist of three mirrors **28, 30, 32** in the form of a triangle. The tunable laser **22** may be aligned coaxially with a first leg **34** of the triangle. Optical energy entering the resonator **16** through the first mirror **28** propagates along the first leg **34** of the resonator **16** and is reflected by a second mirror **32.** Reflected energy from the second mirror **32** propagates along a second leg **36** to the third mirror **30** and is reflected along a third leg **38** to the first mirror **28.** The sum total of the lengths of the legs **34, 36, 38** may be an integral multiple of the resonant frequency.

At the first mirror **28** most of the optical energy is reflected along the first leg **34** and recirculates around the triangle. However, at least some of the energy propagating along the third leg **38** passes through the first mirror **28** and impinges on the detector **20** coaxially aligned with the third leg **38.**

In general, the gas detection system **10** functions in accordance with the principles of spectroscopy. As is known, each gas in the gas stream **14** absorbs optical energy at wavelengths that are characteristic for the gas. By tuning the tunable laser **22** to a characteristic frequency of a predetermined gas, or providing another light source at the characteristic frequency, the system **10** can measure the concentration of the predetermined gas independently of the presence or concentrations of other gases within the gas stream **14.** As is known, the greater the concentration of the predetermined gas, the greater the absorption of the characteristic wavelength of optical energy.

In order to measure gas concentrations, the tunable laser **22** may be tuned to a characteristic wavelength of the gas. A simple mechanical servo **31** may be used to adjust the sum length of the three legs **34, 36, 38** to an integral multiple of the selected wavelength.

The tunable laser **22** may be pulsed at some predetermined rate (*e.g.*, 50 pulses per second) to deliver optical pulses of an appropriate duration (*e.g.*, a few nanoseconds) to the resonator **16.** Pulsing may be accomplished through use of a shuttering device (*e.g.*, an acousto-optic modulator).

The application of the pulses to the resonator **16** causes the optical energy to recirculate around the resonator **16** (*i.e.*, the resonant structure or "rings" of the resonator **16**). The decay rate (*i.e.*, the "ring down rate") of the optical energy within the resonator **16** depends upon the wavelength of the optical energy, the gas within the stream **14,** and the optical losses of the resonator **16.**

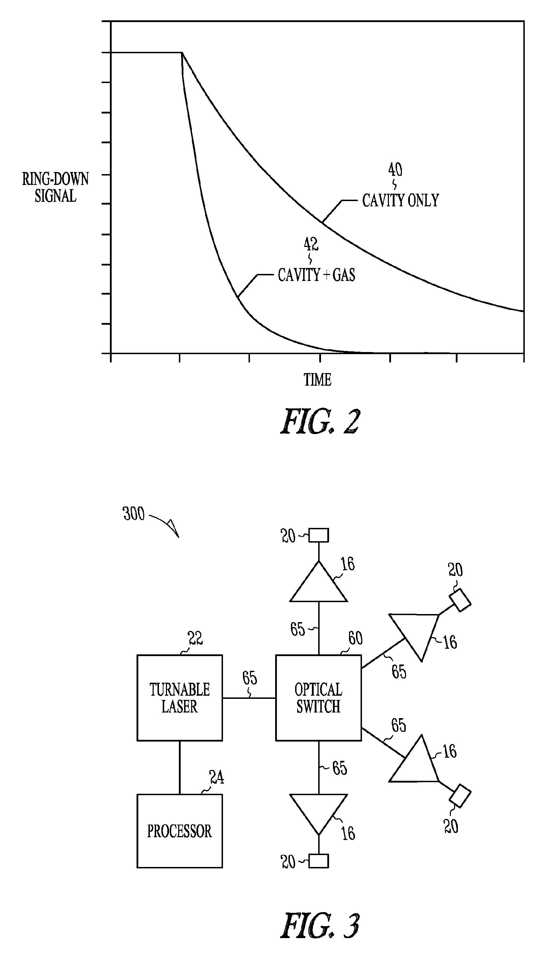

**FIG. 2** is an example of an amplitude versus time graph that shows ring down rates of the resonator **16** in the case of a predetermined gas and the resonator **16** resonating at the characteristic wavelength of the predetermined gas. As shown, the resonator **16** would have a first characteristic curve **40** in a vacuum and a second characteristic curve **42** in the presence of some maximum concentration of the predetermined gas. Any concentration of the predetermined gas below the maximum concentration would have its characteristic curve somewhere between curves **40** and **42.** The group of curves of **FIG. 2** represents a ring down rate profile for a gas.

In an embodiment, the ring down rate (or ring down time) can be calculated using the following equation:

$$\frac{1}{\tau_\lambda} = c\left(\frac{1 - R_\lambda}{L} + \rho_\lambda \sigma_\lambda\right);$$

The variable $\tau_\lambda$ represents the cavity ring down time at a wavelength λ. The term c is the speed of light. $R_\lambda$ is a total or cumulative reflectance of all the mirrors in a particular resonance or ring structure. $L$ is a length of the optical path within the resonance structure, that is, the total distance around the resonance or ring structure. The term $\rho_\lambda$ is the concentration of a gas within the optical path at the wavelength λ, and the term $\sigma_\lambda$ is the absorption cross section of a gas at the wavelength λ.

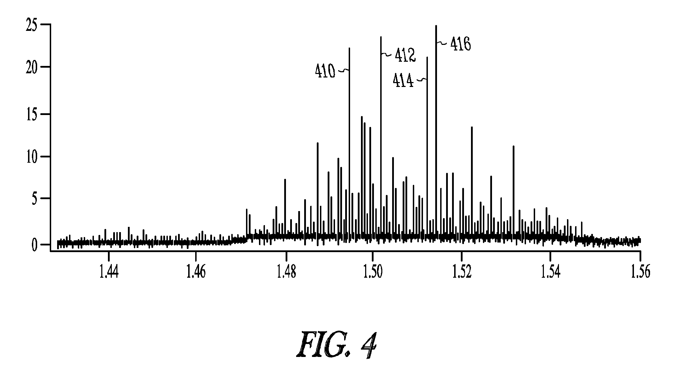

The concentration of a gas can be determined in real-time in any particular resonator **16** in the system **300**. A source of light is pulsed into the system **300** and into one or more optical resonators **16** at a resonant wavelength of the particular gas that is to be detected. As noted above, in an embodiment, the pulse frequency is about 50 pulses per second. If the gas is not present, a ring down time results that indicates the absence of the gas. If the gas is present, a ring down time results that indicates the presence of the gas, and the concentration of that gas $\rho_\lambda$ can be calculated using the above-noted equation. For any particular gas, several different resonant wavelengths are used so that any two compounds that share a single particular resonant wavelength can then be distinguished by the one or more wavelengths that the two compounds do not share. For example, the resonant wavelengths **410, 412, 414,** and **416** for ammonia as indicated in **FIG. 4** could all be used so as to distinguish ammonia from a compound that has resonant wavelengths the same as or very close to wavelengths **412** and **414,** but has no similar wavelengths to **410** and **416.**

To measure a gas concentration, the CPU **24** may sequentially select each gas of the set and measure a concentration as described above based upon a characteristic wavelength of the selected gas. Where the system **10** is used for process control, the measured values may be transferred to a process controller (not shown) as feedback control for the process.

In general, the system **10** may be used to monitor gas constituents of the stream **14** from the parts per million (ppm) to the parts per trillion (ppt) range by measuring gas absorption via changes in the ring down time for unique gas absorption wavelengths and then converting this to concentration using known absorption cross sections.

**FIG. 3** illustrates an example embodiment of a system **300** of a plurality of optical resonators **16** coupled to a tunable laser **22** (or other light source) via optical fiber **65** and an optical switch or other switching/distribution means **60**. As explained above, the tunable laser **22** can be tuned to a particular wavelength or wavelength range, and emit a laser beam at that wavelength or wavelength range. The optical switch **60** can distribute the beam to the plurality of optical resonators **60** in a serial fashion or other distribution method or pattern. In another embodiment, there is no optical switch **60,** and the laser beam is simply equally distributed to the plurality of optical resonators **16**. The processor **24** can control the emission of the laser beam from the tunable laser **22,** and the processor **24** can also be used to receive data from the detector **20** to calculate the ring down time for each individual optical resonator **16.**

In an embodiment, various optical resonators **16** in the system **300** are different sizes and include therein different peak wavelengths. Any particular wavelength can be set in any particular resonator **16** by appropriately tuning a laser or selecting a particular light source. In this manner, a range of gases can be detected at different sensitivity levels.

**FIG. 4** is an example spectrograph **400** illustrating the absorbance of gaseous ammonia ($NH_3$) at several wavelengths (measured in micrometers). The spectrograph **400** includes the wavelength measured in micrometers along the x-axis, and the absorbance along the y-axis. As an example, the spectrograph **400** illustrates that ammonia absorbs the most optical energy at wavelengths of approximately 1.49, 1,50, and 1.51 micrometers as indicated by peaks **410, 412, 414,** and **416** in **FIG. 4.** Such a spectrograph as illustrated in **FIG. 4** can then be compared to the transmittance values at an optical resonator, and a determination can be made as to whether a particular gas (in this example ammonia) is present.

The Abstract is provided to comply with 37 C.F.R. §1.72(b) and will allow the reader to quickly ascertain the nature and gist of the technical disclosure. It is submitted with the understanding that it will not be used to interpret or limit the scope or meaning of the claims.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate example embodiment.

**Claims**

1. A system (300) comprising:

   a plurality of optical resonators (16) with detectors (20);
   a light source (22); and
   optical fibers (65) coupling the plurality of optical resonators to the light source.

2. The system of claim 1, wherein the light source comprises a laser tunable to a plurality of wavelength ranges (22).

3. The system of claim 1, comprising an optical switch (60) to redirect the light source, the optical switch coupling the light source (22) to the plurality of optical resonators (16).

4. The system of claim 1, wherein each of the plurality of optical resonators (16) comprises:

   a section to receive energy from the light source (28); and
   a resonant structure forming a closed circuit path (26, 34, 36, 38).

5. The system of claim 4, wherein the resonant structure comprises a ring structure (26, 34, 36, 38).

6. The system of claim 1, comprising a processor (24) coupled to the plurality of optical resonators (16), the processor configured to obtain a gas concentration using data from the plurality of optical resonators.

7. The system of claim 6, wherein the data from the plurality of optical resonators (16) comprises a ring down time for the plurality of optical resonators.

8. The system of claim 7, wherein the ring down time is calculated as follows:

$$\frac{1}{\tau_\lambda} = c\left(\frac{1 - R_\lambda}{L} + \rho_\lambda \sigma_\lambda\right);$$

   wherein $\tau_\lambda$ is the cavity ring down time at a wavelength $\lambda$;
   $c$ is the speed of light;
   $R_\lambda$ is a total reflectance of one or more mirrors in the system at the wavelength $\lambda$;
   $L$ is a length of an optical path connecting the plurality of resonators;
   $\rho_\lambda$ is the concentration of a gas within the optical path at the wavelength $\lambda$; and
   $\sigma_\lambda$ is the absorption cross section of a gas at the wavelength $\lambda$.

9. A system (300) comprising:

   a plurality of optical resonators (16) with detectors (20);
   a tunable laser (22); and
   an optical fiber (65) coupling the plurality of optical resonators (16) to the tunable laser (22).

10. A system (300) comprising:

    a plurality of optical resonators (16) with detectors (20);
    a light source (22);
    an optical switch (60); and

an optical fiber (65) coupling the plurality of optical resonators (16), the light source (22), and the optical switch (60).

*FIG. 1*

RING-DOWN
SIGNAL

40
CAVITY ONLY

42
CAVITY + GAS

TIME

*FIG. 2*

300

20

16

65

20

16

22

65

60

65

TURNABLE
LASER

OPTICAL
SWITCH

16

24

65

20

16

PROCESSOR

20

*FIG. 3*

FIG. 4

Europäisches
Patentamt

European
Patent Office

Office européen
des brevets

**EUROPEAN SEARCH REPORT**

Application Number

EP 09 16 4830

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/108939 A (UNIV MACQUARIE [AU]; ORR BRIAN JOHN [AU]; HE YABAI [AU]) 17 November 2005 (2005-11-17) * page 26, line 30 - page 27, line 5 * * page 70, line 13 - page 71, line 9; figures 1,5 * | 1-4,6,7, 9,10 | INV. G01N21/39 |
| Y | | 5,8 | |
| Y,D | US 2007/216903 A1 (COLE BARRETT E [US] ET AL) 20 September 2007 (2007-09-20) * figure 1 * | 5 | |
| Y | BERGDEN G ET AL: "CAVITY RING-DOWN SPECTROSCOPY: EXPERIMENTAL SCHEMES AND APPLICATIONS" INTERNATIONAL REVIEWS IN PHYSICAL CHEMISTRY, BUTTERWORTH, SEVENOAKS, GB, vol. 19, no. 4, 1 January 2000 (2000-01-01), pages 565-607, XP008030281 ISSN: 0144-235X * page 569, paragraph 2.1 - page 570 * | 8 | |
| X | US 2005/158868 A1 (TREBBIA JEAN-BAPTISTE [FR] ET AL) 21 July 2005 (2005-07-21) * paragraphs [0015], [0016], [0097], [0104], [0107], [0109], [0110]; figure 4C * | 1,2 | TECHNICAL FIELDS SEARCHED (IPC) G01N G01J |
| Y | US 5 748 325 A (TULIP JOHN [CA]) 5 May 1998 (1998-05-05) * abstract; figures 8,10 * | 1,2,9,10 | |
| Y | US 2004/190148 A1 (CLARK BRYAN [US] ET AL) 30 September 2004 (2004-09-30) * paragraphs [0020] - [0024]; figure 1 * | 1,2,9,10 | |

-/--

The present search report has been drawn up for all claims

| Place of search | Date of completion of the search | Examiner |
|---|---|---|
| Berlin | 19 October 2009 | Brison, Olivier |

EPO FORM 1503 03.82 (P04C01)

Europäisches
Patentamt

European
Patent Office

Office européen
des brevets

# EUROPEAN SEARCH REPORT

Application Number

EP 09 16 4830

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/118997 A1 (LEHMANN KEVIN K [US] ET AL) 24 June 2004 (2004-06-24) * abstract; figure 4 * ----- | 9,10 | |

TECHNICAL FIELDS
SEARCHED      (IPC)

The present search report has been drawn up for all claims

| Place of search | Date of completion of the search | Examiner |
|---|---|---|
| Berlin | 19 October 2009 | Brison, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 16 4830

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2009

| Patent document cited in search report | | Publication date | Patent family member(s) | | Publication date |
|---|---|---|---|---|---|
| WO 2005108939 | A | 17-11-2005 | NONE | | |
| US 2007216903 | A1 | 20-09-2007 | CN | 101454655 A | 10-06-2009 |
| | | | EP | 1996921 A1 | 03-12-2008 |
| | | | JP | 2009530831 T | 27-08-2009 |
| | | | WO | 2007109455 A1 | 27-09-2007 |
| US 2005158868 | A1 | 21-07-2005 | EP | 1548422 A1 | 29-06-2005 |
| | | | FR | 2864622 A1 | 01-07-2005 |
| | | | JP | 2005195588 A | 21-07-2005 |
| US 5748325 | A | 05-05-1998 | NONE | | |
| US 2004190148 | A1 | 30-09-2004 | NONE | | |
| US 2004118997 | A1 | 24-06-2004 | US | 2003109055 A1 | 12-06-2003 |
| | | | US | 2006177939 A1 | 10-08-2006 |
| | | | US | 2006183241 A1 | 17-08-2006 |

EPO FORM P0459

For more details about this annex : see Official Journal of the European Patent Office, No. 12/82

## REFERENCES CITED IN THE DESCRIPTION

**Patent documents cited in the description**

- US 38401706 A
- US 20070216903 A